Europäisches Patentamt

European Patent Office

Office européen des brevets

(19)

(11) EP 0 692 333 A1

## (12) EUROPEAN PATENT APPLICATION

(43) Date of publication:
17.01.1996 Bulletin 1996/03

(51) Int Cl.$^6$: **B23H 7/06**

(21) Application number: 95304894.9

(22) Date of filing: 13.07.1995

(84) Designated Contracting States:
CH DE LI

(30) Priority: 13.07.1994 JP 183054/94

(71) Applicant: FANUC LTD.
Minamitsuru-gun, Yamanashi 401-05 (JP)

(72) Inventors:
• Masuda, Teruo, c/o Fanuc Dai3virakaramatsu
Minamitsuru-gun, Yamanashi, 401-05 (JP)
• Tsuboguchi, Yuji,
c/o Fanuc Dai3virakaramatsu
Minamitsuru-gun, Yamanashi, 401-05 (JP)

(74) Representative:
Billington, Lawrence Emlyn et al
London WC2A 1AT (GB)

### (54) Wire cut electrical discharge machining

(57) Wire cut electrical discharge machining, to form a hole through a workpiece (W), is carried out by moving the machining wire along a series of closed machining paths (D1, D2, D3, C) which are substantially similar to one another but extend one inside the next at a distance therefrom such that the machining proceeds in a core-less manner from the innermost one (D1) of the paths to the outermost one (C) thereof.

FIG. 1

## Description

This invention relates to wire cut electrical discharge machining, more particularly to a machining method for forming a hole through an object being machined.

In wire cut electrical discharge machining, a machining target object (hereinafter referred to as a workpiece) may be machined so as to produce the effect of punching out a hole in the workpiece. In such a wire cut "punching" method, it may be necessary to remove a portion left inside the workpiece (hereinafter referred to as a core), to leave that desired hole open. Previously-considered methods of this kind are:

(1) a method in which the internally remaining core is removed after the completion of rough machining, and thereafter finishing is carried out, and

(2) a method in which the process from rough machining to finishing is carried out after a predetermined amount of uncut portion is set, and the core is cut down by cutting the uncut portion.

Such a previously-considered wire cut punching method is problematic because of a need for manual control, such as direct manual removal of the core, at the required time, or an operator's manual control required to avoid disconnection of the wire when the core is cut free and drops.

However, at the time of the core removal in the punching machining, when a portion to be machined has a small shape, it is possible to shatter and remove the unnecessary portion (this machining will be referred to as coreless machining). Consequently, in order to overcome problems, another machining method can be provided to omit the manual control, in which NC data for the coreless machining is created by using an automatic programming apparatus or the like, and the punching machining is carried out by the program. However, in this method, it is necessary to previously set a machining path so as to enable the coreless machining, and create the program depending upon the machining path. Therefore, all wire moving paths should be preset, resulting in a problem in that a large and complicated program is required.

Alternatively, for the sake of simplicity of program creation, another method can be considered in which a wire machining path is formed depending upon a final machining path by using functions of scaling up and down a graphic and of a variation of offset. However, there is a problem in that this method can be applied to only a simple profile shape.

In an embodiment of the present invention, a profile shape of a machining area to be punched is initially specified to a workpiece. It is possible to specify the profile shape by, for example, a block command in a machining program in a typical NC machining apparatus. Further, a machining path through which the wire passes in the profile shape is found by calculation depending upon shape data of the specified profile shape, and data such as an amount of offset according to machining conditions in wire cut electrical discharge machining such as finishing allowance and wire diameter.

In the calculation to find the machining path, from among line segments for connecting a reference point set in the profile shape and a convex portion of the profile shape, a line segment which does not intersect the profile shape is initially found. Further, a point on the line segment is found as a passing point on the machining path. That is, the line segment for connecting the reference point set in the profile shape and the convex portion of the profile shape is found. If the line segment does not intersect the profile shape, the point on the line segment is defined as the passing point on the machining path. If the line segment intersects the profile shape, there is provided a line segment for connecting the preceding convex portion and the following convex portion which cause no interference, and a point on the line segment is defined as the passing point on the machining path. The found passing points are connected to form a circulating machining path.

A plurality of circulating machining paths are provided in a direction from a center in the profile shape toward the profile shape. Wire cut electrical discharge is carried out while sequentially passing the wire through the plurality of machining paths starting from the innermost machining path toward the outermost machining path, thereby carrying out machining while shattering and removing an unnecessary portion. That is, coreless machining is carried out to remove a core without leaving the unnecessary portion. The number of the plurality of machining paths can be set to an integer greater than a value obtained by dividing a distance from a machining start point in the profile shape to the farthest portion of the profile shape by an amount of the maximum cutting of the wire. By setting the number of paths, it is possible to carry out the machining so as not to leave the unnecessary portion.

In embodiments of the present invention, it is possible to carry out the coreless machining and finishing in the profile shape by simply specifying the profile shape in conformity to the same format as that in typical machining. Further, even in case of a complicated profile shape, it is possible to automatically set the coreless machining path and a finishing path.

Reference will now be made, by way of example, to the accompanying drawings, in which:

Fig. 1 is a machining path diagram illustrating coreless machining embodying the present invention;

Fig. 2 is a diagram showing a punching procedure by wire cut electrical discharge machining;

Fig. 3 is a diagram showing a machining procedure for coreless machining embodying the present invention;

Fig. 4 is a diagram illustrating a method of forming an offset path and a coreless machining path by using a linear block embodying the present invention;

Fig. 5 is a diagram illustrating an embodiment of the present invention that involves a circular arc-like block having a concave circular arc;

Fig. 6 is a diagram illustrating an embodiment of the present invention that involves a circular arc-like block having a convex circular arc;

Fig. 7 is a diagram illustrating a method, embodying the present invention, of forming an offset path and a coreless machining parth, involving a circular arc-like block;

Fig. 8 is a flowchart illustrating a procedure for a machining method embodying the present invention;

Fig. 9 is a diagram illustrating a check on interference between a coreless machining path and an offset path in an embodiment of the present invention; and

Fig. 10 is a diagram illustrating a check on interference between a coreless machining path and an offset path in an embodiment of the present invention.

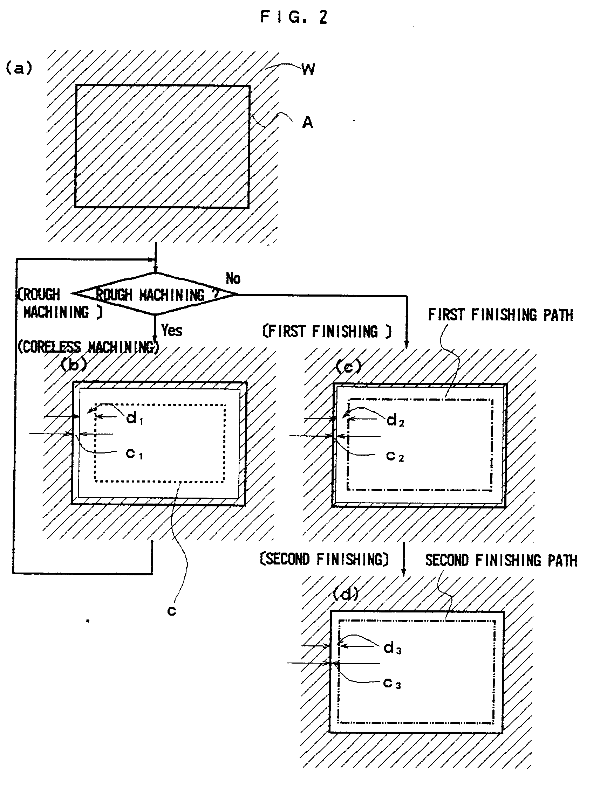

As one aspect of rough machining, there is employed a coreless machining of removing an unnecessary portion inside a workpiece by using wire cut electrical discharge. Finishing may be carried out after the coreless machining. Fig. 2 is a diagram showing a punching procedure by using the wire cut electrical discharge. In Fig. 2, an unprocessed portion is shown by a shaded portion. In Fig. 2, in order to punch out a profile shape A shown by the solid line from an object to be machined W (hereinafter referred to as workpiece) shown in (a), the coreless machining shown in (b) is carried out if the coreless machining serving as rough machining is not completed. Finishing shown in (c) and (d) are carried out if the coreless machining is completed. The coreless machining (b) is carried out by using an offset path C shown by the broken line in the drawing as a wire passing path. The offset path C is a path formed by offsetting the profile shape A by the sum of a finishing allowance $c_1$ and a wire diameter correction number $d_1$ (an amount of wire diameter correction set in an offset memory $d_1$) in the coreless machining, i.e., the sum of $c_1$ and $d_1$.

In order to carry out finishing after the completion of the coreless machining, the finishing shown in (c) and (d) are carried out. In the drawing, the finishing is carried out twice. In the finishing, a machining path shown by the one dot chain line or the two dot chain line is defined as a wire path. In the drawing, the finishing allowance $c_1$ and the wire diameter correction number $d_1$ serving to set a finishing path respectively correspond to $c_2$ and $d_2$ in first finishing, and to $c_3$ and $d_3$ in second finishing.

A description will now be given of a machining method in the coreless machining embodying the present invention.

The coreless machining embodying the present invention comprises four steps of: (1) specifying a profile shape, (2) forming an offset path depending upon the profile shape, (3) forming a coreless machining path depending upon the offset path, and (4) carrying out wire electrical discharge machining by moving an electrode along the coreless machining path and the offset path.

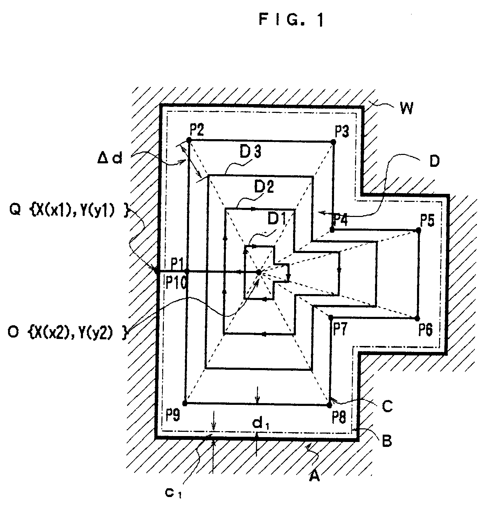

Fig. 1 is a machining path diagram illustrating the coreless machining embodying the present invention. In Fig. 1, the shaded portion means the unprocessed portion of the workpiece W, and a blank portion surrounded by the shaded portion (specifically, a portion surrounded by the one dot chain line B) means a portion to be removed by the coreless machining. Further, in the drawing, a shape shown by the bold solid line is equivalent to the profile shape A of a product to be formed according to the wire cut electrical discharge machining. In the profile shape A, points P1, P2,... P9, P10 (= P1) are connected to obtain a closed path, and the closed path is an offset path C through which a wire electrode (hereinafter briefly referred to as wire) passes to form a substantially profile shape A. Further, inside the offset path C, three closed paths D1, D2, and D3 are the coreless machining paths whose shape are substantially identical with a shape of the offset path C.

The wire passes through the coreless machining paths D1, D2, and D3, and further passes through the offset path C to carry out electrical discharge machining. Thus, the discharge operation can remove an inside portion of a shape shown by the one dot chain line B of Fig. 1. The above operation corresponds to the rough machining. Further, it is possible to obtain the product having the profile shape A by cutting the finishing allowance cl in the finishing.

In the machining using the coreless machining paths D1, D2, and D3 shown in Fig. 1, the machining is started from a reference point O { X(x2), Y(y2)} in the profile shape A toward a point Q { X(x1), Y(y1)} on the profile shape A. Further, the machining is carried out from a point intersecting the inmost coreless machining path D1 along the coreless machining path D1. When the machining along the inmost coreless machining path D1 is completed, the wire proceeds toward the point Q { X(x1), Y(y1)} again. Subsequently, the machining is carried out from a point intersecting the next coreless machining path D2 along the coreless machining path D2. The machining is sequentially carried out along the coreless machining paths D, and finally carried out along the offset path C.

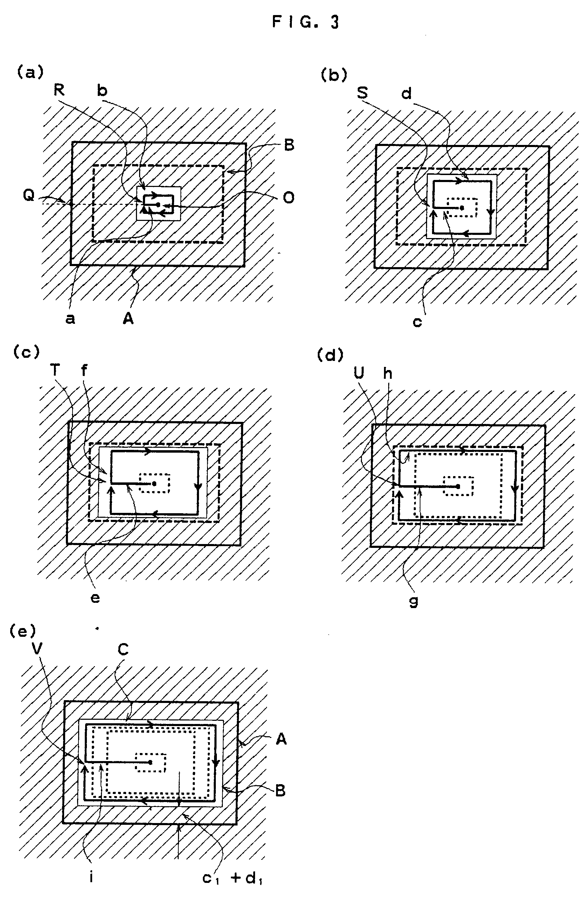

A description will now be given of a machining procedure for the coreless machining with reference to Figs. 3(a) to 3(e). The coreless machining includes machining by using the coreless machining paths shown in Figs. 3 (a) to 3(d), and machining along the offset path C shown in Fig. 3(e). When the machining along the offset path C is completed, removal is made up to the portion shown by the solid line B shown in Fig. 3(e). In Fig. 3, the offset path C is shown by the broken line.

Initially, wire machining is started from a reference point O disposed inside a profile shape A in Fig. 3(a). The wire machining is carried out along a path a from the reference point O toward a point Q on the profile shape A. Subsequently, the machining is started along a coreless machining path b from an intersection R between the path a and the innermost coreless machining path b. After the completion of the machining along the coreless machining path b, subsequent wire machining is made along a straight line c for connecting the reference point O and the point Q up to an intersection S between the line c and the next coreless machining path d. Thereafter, the wire machining is continued along the coreless machining path c.

Similarly, as shown in Figs. 3(c) and 3(d), the machining is made along a straight line e and a coreless machining path f, and a straight line g and a coreless machining path h.

Fig. 3(e) shows the offset path C which is provided outside the coreless machining paths b, d, f and h. The wire proceeds toward the point Q along a straight line i after the completion of machining of the coreless machining path h. The machining is carried out according to the coreless machining path h from an intersection V between the line i and the coreless machining path h, thereby carrying out machining according to the offset path C. A machined shape B is formed by the machining according to the offset path C, and has a dimension obtained by offsetting the profile shape A by the a finishing allowance c1 and a wire diameter correction number d1 in the coreless machining.

A description will now be given of an illustrative program used in a machining method embodying the present invention. For example, the program includes (Coreless machining command), (Profile shape command), and (Finishing command),as will be described below.

(Coreless machining command)

G81 P(ns) Q(nf) K($\Delta$d) R(c1) D(d1) S(s1) F(f1);

(Profile shape command)

N(ns) G01 X(x1) Y(y1) [G4l D(dd) G5l T(tt)];
.
    D(dd) S(ss) F(ff)
.
N(nf) X(x2) Y(y2) [G40 G50];

(Finishing command)

G80 P(ns) Q(nf) R(c2) D(d2) S(s2) F(f2);
G80 P(ns) Q(nf) R(c3) D(d3) S(s3) F(f3);
G80 P(ns) Q(nf);

In the above program, (Coreless machining command) means a block in which steps for the coreless machining are set. The command represented by "G81" defines the coreless machining command, subsequent "P (ns)" sets a top sequence number ns in a profile shape command block group, "Q(nf)" sets a termination sequence number nf in the profile shape command block group, and "K($\Delta$d)" sets an amount of the maximum cutting in the coreless machining. Further, "R(c1)" sets the finishing allowance c1 in the coreless machining so as to set a shape obtained by offsetting the profile shape by the finishing allowance when the coreless machining is completed, "D(d1)" sets the wire diameter correction number d1 in the coreless machining so as to set an amount of offset according to machining conditions in the wire machining, "S(s1)" sets a machining condition number s1 in the coreless machining, and "F(f1)" sets a constant feed rate f1 in the coreless machining.

In the (Coreless machining command), variables are set for use in the profile shape command and the finishing command as will be described infra.

The subsequent (Profile shape command) is a command to determine the profile shape for coreless machining. Further, it is possible to specify a shape by a combination of command blocks such as linear interpolation (G01), or circular arc interpolation (G02/03) identical with that in a typical shape programming in an NC apparatus.

In "N(ns) G01 X(x1) Y(y1)" of the illustrative program, "N(ns)" means a first block of the profile shape command, and "G01 X(x1) Y(y1)" means an initial approach command from a machining start point (the reference point O in Fig. 1) to the profile shape. A point represented by "X(x1) Y(y1)" corresponds to the point Q in Fig. 1.

Further, in "G41 D(dd) G5l T(tt)," an amount of wire diameter correction dd is set by "G4l D(dd)" by which, for example, the amount of wire diameter correction on the left side of a wire traveling direction can be set. Further, an amount of taper correction tt of the wire is set by "G51 T(tt)."

"N(nf)" means that this block is a termination block in the profile shape command block group, and "X(x2) Y (y2)" means that the process returns to the reference point O in order to specify the profile shape. Further, "G40 G50" is set to cancel the amount of wire diameter correction and the amount of taper correction of the wire set in "G41 D(dd) G51 T(tt)."

During the command of the profile shape, according to "D(dd) S(ss) F(ff)," it is also possible to vary the wire diameter correction number, the machining condition number, and the constant feed rate.

After the profile shape is set according to the block from "N(ns)" to "N(nf)," a CPU to control a wire cut electrical discharge machine or a control unit connected to the wire cut electrical discharge machine calculates and sets a coreless machining path to carry out the coreless machining depending upon data of the profile shape. A description will be given of a method of calculating the coreless machining path depending upon the profile shape.

When the coreless machining is completed according to the coreless machining path set depending upon the profile shape, punching machining is carried out to punch a shape substantially identical with the profile shape. Thereafter, in order to carry out the finishing, it is necessary to set the block (Finishing command) in the program.

In the block (Finishing command), "G80" in "G80 P (ns) Q(nf)" defines the finishing command, and "P(ns) Q (nf)" means that the finishing is carried out in the range of the entire profile shape command block. Further, the finishing is carried out according to "R(c2) D(d2) S(s2) F (f2)," that is, a finishing allowance $c_2$ in the finishing, a wire correction number $d_2$ in the finishing, a machining condition number $s_2$ in the finishing, and a constant feed rate $f_2$ in the finishing.

It is possible to repeat the finishing a plurality of number of times by commanding the same block as that described before. In this case, machining accuracy can be improved by setting "R(c3) D(d3) S(s3) F(f3), "that is, by changing the finishing allowance in the finishing to $c_3$, changing the wire correction number to $d_3$, changing the machining condition number to $s_3$, and changing the constant feed rate to $f_3$.

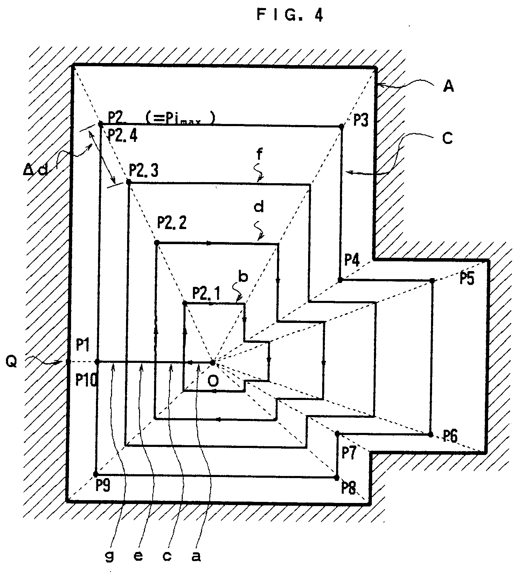

A description will now be given of a method of forming an offset path and a coreless machining path depending upon a profile shape with reference to Figs. 4 to 7. Here, the offset path and the coreless machining path are formed by using a linear block and a circular arc-like block.

Referring to Fig. 4, a description will now be given of a method of forming the offset path C and the coreless machining path D by using the linear block. In Fig. 4, a profile shape A is set according to the profile shape command shown in the program. The offset path C is initially set. In order to set the offset path C, a finishing allowance $c_1$ and an amount of wire diameter correction $d_1$ are used. That is, the offset path C is obtained by offsetting the profile shape A by $c_1$ and $d_1$. In Fig. 4, a wire passage along the offset path C is set by points P1, P2,... P9, and P10 (= P1). The offset path C can be found depending upon a calculation after the profile shape command, the finishing allowance $c_1$, and the amount of wire diameter correction $d_1$ are input into the CPU of the NC apparatus or the control unit connected to the NC apparatus. The calculated offset path C is stored in storage means, and is read out and used at a time of calculation for the coreless machining path D, or machining depending upon the offset path C.

Subsequently, in vectors <0-P2>, <0-P3>,...<0-P9> for connecting a reference point O and the points P2, P3,... P9 on the offset path C (here the brackets < > being used as a vector sign), the maximum value l0Pimaxl is found from among absolute values l0-P2l, l0-P3l,... l0-P9l. In the embodiment of Fig. 4, the absolute value of the vector 0-P2 for connecting the reference point 0 and the point P2 serves as the maximum value l0Pimaxl.

Next, the number of the coreless machining paths D (hereinafter referred to as number of times of cutting N) is found depending upon the maximum value l0Pimaxl and the amount of maximum cutting $\Delta d$ in the wire machining. The number of times of cutting (integer) N can meet the following expression:

$$N \geq l0Pimaxl/\Delta d > N-1 \qquad (1)$$

In the embodiment of Fig. 4, N = 4.

Subsequently, N-1 points P2.1, P2.2,... P2.N-1; P3.1, P3.2,... P3.N-1;... are set on straight line segments 0-P2, 0-P3,... 0-P9 for respectively connecting the reference point O and the point P2, the reference point O and the point P3,... the reference point O and the point. P9 such that the N-1 points can equally divide the line segments into N partitions. Further, the coreless machining path b is set by respectively connecting the points P2.1, P3.1,... P9.1, P2.1 through straight lines. Similarly, the coreless machining path d is set by respectively connecting the points P2.2, P3.2,... P9.2, P2.2 through straight lines, and the coreless machining path f is set by respectively connecting the points P2.3, P3.3,... P9.3, P2.3 through straight lines.

In the first coreless machining according to the coreless machining path b, the wire passes through an interval a up to an intersection on the coreless machining path b along a straight line for connecting the reference point O and the point Q on the offset path, and thereafter passes through the coreless machining path b. In the second coreless machining according to the coreless machining path c, the wire passes through an interval c up to an intersection on the coreless machining path d along the straight line extending from the reference point O to the point Q, and thereafter passes through the coreless machining path d. Similarly, in the third coreless machining according to the coreless machining path f, the wire passes through an interval e up to an intersection on the coreless machining path f along the straight line extending from the reference point O to the point Q, and thereafter passes through the coreless machining path f.

After machining along the coreless machining paths b, d, and f are respectively completed, the process proceeds to the machining along the offset path C. When the machining along the offset path C is completed, an inside portion of the profile shape A is removed with the finishing allowance $c_1$ left.

The coreless machining paths D are found as described above, and are stored in a memory together with the offset path C. Further, the data are read out and used at a time of machining.

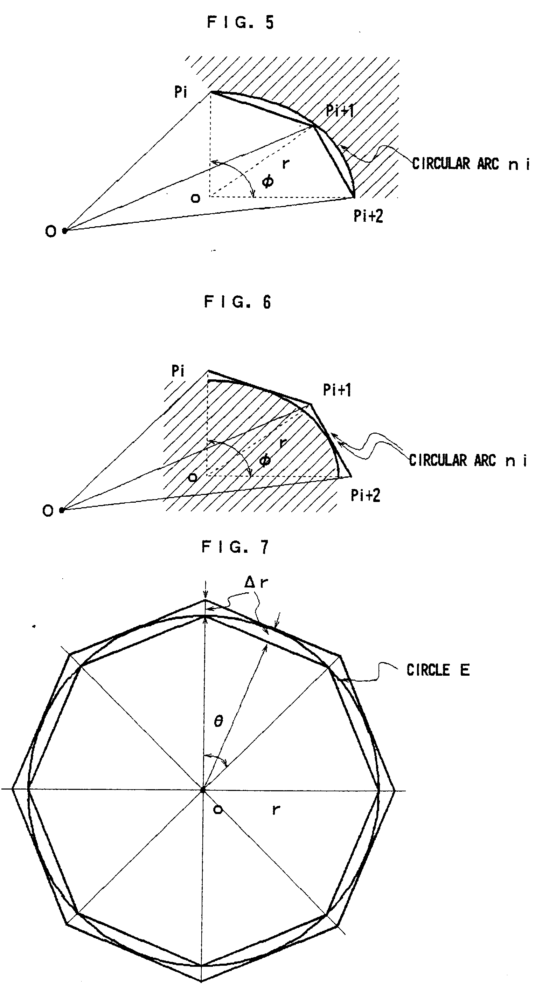

A description will now be given of a method of forming the offset path C and the coreless machining paths D by using the circular arc-like block with reference to Figs. 5 to 7. The above method of forming the coreless machining paths D by using the linear block can be applied by substituting the circular arc-like block for the plurality of linear blocks.

Fig. 5 is a diagram illustrating circular arc-like blocks having a concave circular arc. Fig. 6 is a diagram illustrating a circular arc-like block having a convex circular arc. In Fig. 5, the circular arc $n_i$ forming a part of a profile shape A is the concave circular-arc, and is used to cut an inside portion of the circular arc. When the circular arc block $n_i$ having a radius r is commanded, a circle E having the radius r as shown in Fig. 7 is supposed to find a regular N-polygon (N = 4, 8, 12, 16, 32 ...) with the circle E serving as a circumcircle. In Fig. 7, the maximum gap between the regular N-polygon and the circle E is defined as $\Delta r$.

The polygonal number N of the regular N-polygon is found by multiplying n (n = 1, 2... ) meeting the following expression, by 4 (N = 4n):

$$\cos(\pi/4n) \geqq (1 - \Delta d/r) > \cos(\pi/4(n-1)) \quad (2)$$

where $\Delta d$ is the amount of maximum cutting by the wire electrical discharge machining of the wire electrode. By finding N depending upon n obtained from the above expression, a relationship $\Delta r \leqq \Delta d$ can be obtained.

Further, in Fig. 6, a circular arc $n_i$ forming a part of a profile shape A is a convex circular arc, and is used to cut an outside portion of the circular arc. When the circular arc block $n_i$ having a radius r is commanded, a circle E having the radius r as shown in Fig. 7 is supposed to find a regular N-polygon (N = 4, 8, 12, 16, 32... ) with the circle E serving as an incircle. Here, a polygonal number N of the regular N-polygon is found by multiplying n (n = 1, 2 ...) meeting the following expression, by 4 (N = 4n):

$$\cos(\pi/4n) \geqq r/(r + \Delta d) > \cos(\pi/4(n-1)) \quad (3)$$

By finding N depending upon n obtained from the above expression, the relationship $\Delta r \leqq \Delta d$ can be obtained as in the concave circular arc.

Further, the number of partitions M of the circular arc $n_i$ is set according to a central angle $\phi$ of the circular arc $n_i$. The number of partitions M (integer) of the circular arc $n_i$ can meet the following expression:

$$M \geqq N \cdot (\phi/2\pi) > M - 1 \quad (4)$$

The expression (4) shows at least how many sectors having the radius r and a central angle $\phi$ (= $2\pi/N$) shown in Fig. 7 are required to form sectors having the radius r and the central angle $\phi$. If N = 8 as shown in Fig. 7, and the angle $\phi$ is $\pi/2$ as shown in Fig. 5, then N ($\phi/2\pi$) = 2 (= M). Therefore, in the circular arc-line block defined by the points $P_i$ and $P_{i+2}$, the radius r, and the central angle $\phi$ as shown in Fig. 5, one intermediate point $P_{i+1}$ is set to divide the block into two pieces.

As set forth above, according to the above expression, the circular arc $n_i$ is divided into M pieces, and a calculation is made to find intersections ($P_i$, $P_{i+l}$, ... $P_{i+M}$) of the divided linear blocks and the offset path so as to determine the coreless machining path D.

As in the linear block described before, the offset path C can be found by the calculation after inputting the profile shape command, the finishing allowance c1, and the amount of wire diameter correction d1 into the CPU of the NC apparatus or the control unit connected to the NC apparatus. The calculated offset path C is stored in storage means, and is read out and used at a time of calculation for the coreless machining path D or machining depending upon the offset path C.

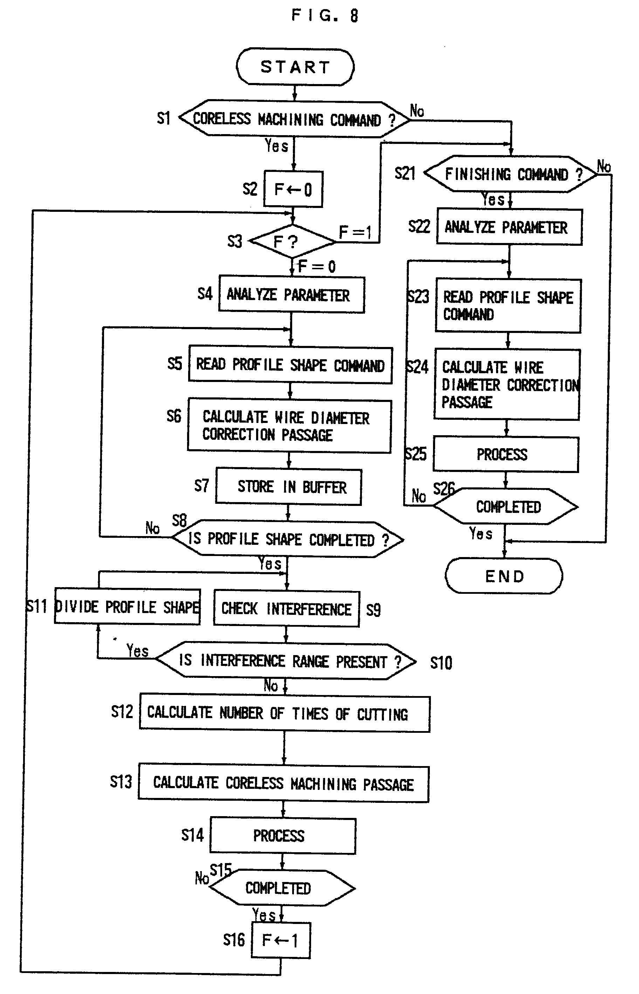

A procedure for the machining method embodying the present invention will be discussed below with reference to a flowchart of Fig. 8. Initially, it is decided whether or not coreless machining is carried out in the wire cut electrical discharge machine depending upon presence or absence of the coreless machining command in the machining program. The decision can be made by, for example, checking presence or absence of a command "G81" indicating the (Coreless machining command) described before. If the coreless machining command is present, the process subsequently proceeds from Steps S2 to S16. If the coreless machining command is absent, the process subsequently proceeds from Steps S21 to S26 (Step S1).

When there is the coreless machining command, a flag F indicating a completion state of coreless machining processing is set to a value of "0" indicating an unprocessed state (Step S2). Further, a decision of the value of the flag F is made in Step S3.

When the flag F has the value of "0", i.e., the coreless machining is in the unprocessed state, the process subsequently proceeds from Steps S4 to S16. When the flag F has a value of "1", i.e., the coreless machining is completed, the process subsequently proceeds from Steps S21 to S26 (Step S3).

In the coreless machining, as shown in the block "G81 P(ns) Q(nf) K($\Delta d$) R(c1) D(d1) S(s1) F(f1);" in the above program, various parameters used for the coreless machining are initially read for analysis (Step S4). Further, the profile shape command is read to introduce a profile shape used for the machining (Step S5).

A passage whose wire diameter is corrected is calculated to find a path depending upon the parameters and the profile shape read in Steps S4 and S5 (Step S6), and the found path is stored in a buffer such as memory (Step S7).

The process from Step S5 to Step S7 is repeated until the entire profile shape command is completed, the profile shape used for the machining is completed (Step S8).

Subsequently, as set forth above, a coreless machining path and an offset path are formed depending upon the profile shape. In the coreless machining path and the offset path, it is necessary to make a decision whether or not the coreless machining path interferes with the offset path (Step S9).

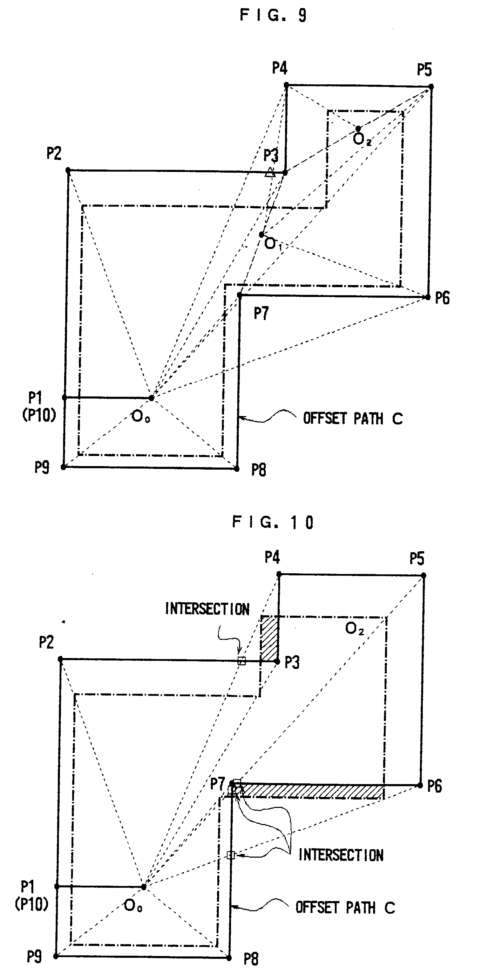

A description will now be given of a method of checking interference of the coreless machining path with the offset path with reference to Figs. 9 and 10.

In Fig. 10, according to the above method of forming the offset path C and the coreless machining path, the coreless machining path (shown by the one dot chain line in Fig. 10) is formed by using a reference point O0 with respect to the offset path C (shown by the solid line in Fig. 10). In this case, there are provided line segments for connecting the reference point O0 and points P2, P3,... P8, P9 on the offset path C, and it is checked whether or not the line segments intersect the offset path C. In Fig. 10, though some line segments O0-P2, O0-P3, O0-P7, O0-P8, and O0-9 do not intersect the offset path C, other line segments O0-P4, O0-P5, and O0-P6 intersect the offset path C (see the square mark □ in Fig. 10). When passing points of the coreless machining path are disposed on the line segments intersecting the offset path C, the coreless machining path may be formed as shown by the one dot chain line in Fig. 10. This coreless machining path interferes with the offset path C. If the wire is moved for machining along the careless machining path, shaded portions are erroneously cut and removed though no machining is required for the portions.

Hence, it is decided whether or not the interference is caused by checking whether or not the coreless machining path intersects the offset path C (Step S9). If there is an interference range, the process proceeds to Step S11 where the profile shape is divided to provide another profile shape causing no interference (Step S10).

The interference checking processing in Steps S9 and S10 can be carried out by a calculation to find intersections of the offset path C and the line segments for connecting the reference point and points on the offset path depending upon data of the offset path C found in Step S6 and data of the reference point.

Further, as will be described below the profile shape can be divided in Step S11 by providing another reference point causing no interference so as to divide the profile shape. As shown in Fig. 10, the line segment for connecting the point P4 and the reference point O0 intersects the offset path C. Hence, instead of the reference point O0, a new reference point is set such that a line segment for connecting the new reference point and the point P4 does not intersect the offset path C. There is provided a line segment for connecting a point immediately before a point causing the interference and a point at which the interference is released, and an intermediate point of the line segment is employed as the new reference point. In case of the point P4, the point P3 serves as the point immediately before the point causing the interference, and the point P7 serves as the point at which the interference is released. Thus, an intermediate point of a line segment P3-P7 for connecting the point P3 and the point P7 is employed as a reference point O1.

Consequently, depending upon the new reference point O1, the interference is similarly checked. In this case, a line segment for connecting the reference point O1 and the point P4 intersects the offset path C, resulting in generation of the interference (see the triangular mark Δ in Fig. 9). Then, similarly, there is provided a line segment P3-P5 for connecting the point P3 serving as the point immediately before the point causing the interference and the point P5 at which the interference is released, and an intermediate point of the line segment P3-P5 is employed as a reference point O2. Depending upon the reference point O2, the line segment O2-P4 does not interfere with the offset path C.

Finally, the coreless machining path is formed by using the reference point O0 for the points P2, P3, P7, P8, and P9, using the reference point O1 for the points P5 and P6, and using the reference point O2 for the point P4.

When there is provided a profile shape causing no interference, as described in the method of forming the offset path and the coreless machining path, the number of times of cutting N is found depending upon the expression (1) (Step S12), and the coreless machining path is set by calculation depending upon the linear block and the circular arc-like block (Step S13).

Further, the calculated coreless machining path is stored in a memory, and the machining is carried out by reading out the path data for a command to an NC apparatus (Step S14).

The machining processing in Steps S13 and S14 are repeated until the coreless machining processing is completed (Step S15).

After the coreless machining processing is completed, the flag F is set to "1" so as to indicate that the coreless machining is completed (Step S16).

In the finishing starting from Step S21, it is initially decided whether or not a machining command is present, thereby deciding whether or not the finishing is carried out (Step S21). When the finishing is carried out in response to the finishing command, as shown in the block "G81 P(ns) Q(nf) K($\Delta$d) R(c1) D(d1) S(s1) F(f1);" in the above program, required parameters are analyzed among the various parameters used for the coreless machining (Step S22). Further, the profile shape command is read to introduce a profile shape used for the machining (Step S23). Depending upon the read parameters and the read profile shape, a passage whose wire diameter is corrected is calculated to find a finishing path (Step S24).

By moving the wire according the found finishing path, the finishing is carried out for a workpiece which is roughly machined according to the coreless machining, and the process from Step S23 to Step S25 is repeated until the finishing is completed (in Steps S25 and S26).

Thus, in dependence upon a profile shape (A), serving as a path commanded in a machining program, a wire diameter a finishing allowance, a closed machining path (C) is set inside the profile shape (A). Further, in dependence upon positions of a plurality of points (P2, P3,...) forming the machining path (C), one or more machining paths (b, d, and f) are set inside the machining path (C) to be substantially similar to the machining path (C). Wire cut electrical discharge is carried out by moving a wire electrode along the machining paths (b, d, and f) and the offset path (C) so as to remove an inside portion of the profile shape (A).

## Claims

1. A wire cut electrical discharge machining method of removing material to form, through a workpiece (W), a hole having a desired cross-section, comprising the steps of:

    defining a closed offset path (C) extending inwardly of the profile (A) of the desired cross-section and made up of straight lines interconnecting a plurality of operational direction-changing points (P2, P3, ... P9) and extending generally parallel to respective corresponding parts of the profile of the said cross-section and at a distance $(d_1 + c_1)$ therefrom such that the wire cut electrical discharge machining along that path will produce a cut boundary (B) extending slightly inwardly of that profile (A);

    defining a reference point (0) within the said closed offset path (C);

    defining a first additional closed path (D3), within the said closed offset path (C), made up of a plurality of straight lines interconnecting a plurality of intermediate direction-changing points and extending parallel to respective corresponding lines of the said offset path, at least some of the said intermediate direction-changing points being defined at respective positions along straight lines from the said reference point to respective corresponding ones of the said operational direction-changing points;

    defining at least one further such additional closed path, within the said first additional closed path and using the same reference point (0), the distance between the first additional closed path and the said offset path, and the distance between the or each further additional closed path and the additional closed path defined next inwardly thereof, being selected to ensure that if the machining is performed along each of the defined additional closed paths in turn, from the innermost one outwardly, and then along the said offset path, the machining will proceed in a coreless manner; and

    performing the wire cut electrical discharge machining along each of the defined additional closed paths in turn, from the innermost one outwardly, and then along the said offset path.

2. A punching method using a wire cut electrical discharge machine, comprising the steps of:

    specifying a profile shape (A) of a machining area to a machining program;

    setting one closed offset path (C) formed in the profile shape (A) by interconnecting a plurality of points (P2, P3,...) through lines depending upon said profile shape (A), a wire diameter, and a finishing allowance;

    setting one reference point (0) at an intermediate position surrounded by the offset path (C);

    setting, on line segments (0-P2, 0-P3,... ) for connecting the reference point (0) and the respective points (P2, P3,... ) on the offset path, one or more partition points (P2.1, P2.2, ... ) to divide the respective line segments into two or more predetermined number of intervals;

    providing closed machining paths (b, d, and f) by connecting the corresponding points through lines among the partition points set on the respective line segments; and

    removing an inside portion of the profile shape (A) by carrying out wire cut electrical discharge while moving a wire electrode along said machining paths (b, d, and f) and said offset path (C).

3. A punching method using a wire cut electrical discharge machine according to claim 2 further comprising the steps of:

    when the profile shape (A) at least partially has a circular arc-like block, setting one or more intermediate points on the circular arc thereof, supposing, as a new profile shape (A), a shape formed by connecting through lines points disposed between both end points of the circular arc-like block and the intermediate points, and setting a part of the offset path (C) corresponding to a part of the circular arc-like block of the profile shape (A) depending upon the supposed profile shape (A),

    wherein the number of intermediate points set on the circular arc is determined depending upon a relationship between the amount of maximum offset between the circular arc and the supposed profile shape (A), and an amount of cutting by the wire electrode.

4. A punching method using a wire cut electrical discharge machine according to claim 2 or 3, further comprising the steps of:

    deciding whether or not the line segment for connecting the reference point (0) and any one of the points (P2, P3,... ) on said offset path intersects said offset path (C);

    when intersection is caused, setting the second reference point, the third reference point or subsequent reference point (01, 02,... ) as required in addition to the reference point (0) at different positions in an area surrounded by said offset path (C);

    combining the points on the offset path with any one of the reference points so as not to intersect a line for connecting one point on the offset path and one of said reference points (01, 02,... ) with the offset path (C);

    setting one or more partition points (P2.1, P2.2,...) to divide the line segment for connecting the point on the offset path and said reference point in the combination into two or more predetermined number of intervals;

setting a closed machining path passing through corresponding points among said partition points set on the respective line segments; and

removing an inside portion of the profile shape (A) by carrying out wire cut electrical discharge while moving the wire electrode along said machining paths and said offset path.

5. A punching method using a wire cut electrical discharge machine according to claim 4, wherein said second reference point, third reference point,... (01, 02,... ) are set at an intermediate point of a line for connecting any one of the points (P2, P3,... ) on said offset path and another point thereof.

6. A punching method using a wire cut electrical discharge machine according to claim 2, 3, 4 or 5 wherein, on the line segments (0-P2, 0-P3, ...) for connecting said reference points (0, 01, 02,...) and the respective points (P2, P3,... ) on said offset path, one or more partition points (P2.1, P2.2,...) are set to divide the respective line segments into a plurality of intervals, and the number of partition points being determined such that the longest interval among the set intervals becomes equal to or less than an amount of the maximum cutting at a time of machining by the wire electrode.

7. A punching method using a wire cut electrical discharge machine according to any one of claims 2 to 6, wherein if two or more machining paths are set in the offset path by setting two or more partition points on the line segments for connecting said reference point and the point on said offset path, a machining program is commanded such that the wire electrode passes through sequentially from the innermost machining path toward the outermost machining path, and finally passes through said offset path.

8. A punching method using a wire cut electrical discharge machine according to any one of claims 2 to 7, wherein wire electrical discharge is carried out by passing the wire electrode through said machining paths (b, d, and f) and said offset path (C) so as to remove an area of a workpiece surrounded by the profile shape (A), and finishing being thereafter carried out along said profile shape (A).

F I G. 1

F I G. 2

(a)

W

A

(ROUGH MACHINING) ROUGH MACHINING ? No

FIRST FINISHING PATH

Yes (FIRST FINISHING)

(CORELESS MACHINING)

(b)

$d_1$

$c_1$

c

(c)

$d_2$

$c_2$

(SECOND FINISHING) SECOND FINISHING PATH

(d)

$d_3$

$c_3$

F I G. 3

(a)
(b)
(c)
(d)
(e)

FIG. 4

FIG. 5

CIRCULAR ARC ni

FIG. 6

CIRCULAR ARC ni

FIG. 7

CIRCLE E

F I G. 8

F I G. 9

F I G. 10

European Patent Office

**EUROPEAN SEARCH REPORT**

Application Number

EP 95 30 4894

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 017 no. 181 (M-1394) ,8 April 1993 & JP-A-04 336919 (JAPAX INC) 25 November 1992, | 1,2 | B23H7/06 |
| A | * abstract * | 3-8 | |
| A | EP-A-0 444 202 (FANUC LTD) 4 September 1991 * page 3, line 28 - line 50 * * abstract; claims 1-11; figures 1-3 * | 1-8 | |
| A | PATENT ABSTRACTS OF JAPAN vol. 016 no. 366 (M-1291) ,7 August 1992 & JP-A-04 115822 (MITSUBISHI ELECTRIC CORP) 16 April 1992, * abstract * | 1-8 | |
| A | PATENT ABSTRACTS OF JAPAN vol. 015 no. 314 (M-1145) ,12 August 1991 & JP-A-03 117519 (MITSUBISHI ELECTRIC CORP) 20 May 1991, * abstract * | 1-8 | TECHNICAL FIELDS SEARCHED (Int.Cl.6) B23H |
| A | EP-A-0 413 889 (MITSUBISHI ELECTRIC CORP) 27 February 1991 * page 5, line 1 - line 26 * * abstract; figures 1-4 * | 1-8 | |
| A | EP-A-0 431 186 (FANUC LTD) 12 June 1991 * abstract; figures 1-5 * | 7,8 | |

The present search report has been drawn up for all claims

| Place of search | Date of completion of the search | Examiner |
|---|---|---|
| THE HAGUE | 12 September 1995 | Haegeman, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)